# FASCICULE DE BREVET EUROPEEN

(11) **EP 0 784 553 B1**
(45) Date de publication et mention de la délivrance du brevet: **27.05.1998**
(21) Numéro de dépôt: 95931267.9
(22) Date de dépôt: 20.09.1995
(51) Int. Cl.: B60T 8/36, B60T 8/26, G05D 16/20

(54) **ELECTROVALVE DE REGULATION DE PRESSION HYDRAULIQUE ET APPLICATION AUX CIRCUITS DE FREINAGE**
ELEKTROVENTIL FÜR HYDRAULISCHE DRUCKREGELUNG UND ANWENDUNG IN BREMSANLAGEN
HYDRAULIC PRESSURE CONTROL ELECTROVALVE AND ITS USE IN BRAKING CIRCUITS

(30) Priorité: 13.10.1994 FR 9412185
(43) Date de publication de la demande: 23.07.1997
(73) Titulaire: Bosch Systemes de Freinage, 93700 Drancy (FR)
(72) Inventeur: MICHON, Jean, Pierre, F-77178 Saint-Pathus (FR); MULLER, Philippe, F-95100 Argenteuil (FR); AUDRAIN, Patrick, F-93290 Tremblay-en-France (FR); BOURLON, Philippe, F-93300 Aubervilliers (FR)
(74) Mandataire: Bentz, Jean-Paul
(86) Numéro de dépôt international: FR9501205
(87) Numéro de publication internationale: WO9611828

(56) Documents cités:
- EP-A- 0 452 174
- WO-A-93/15939
- DE-A- 3 412 351
- DE-A- 4 036 940
- DE-A- 4 122 282
- US-A- 4 940 295

## Description

L'invention concerne à titre principal une électrovalve proportionnelle de régulation de pression d'un fluide hydraulique, dotée d'une entrée haute pression, d'une entrée basse pression, et d'une sortie sur laquelle elle peut délivrer une pression contrôlée, cette électrovalve comprenant :
- un corps percé d'un alésage reliant des première et seconde chambres d'extrémité, celles-ci étant en outre reliées l'une à l'autre en permanence par un conduit;
- un tiroir de régulation coulissant dans l'alésage et présentant une section de pression différentielle propre à constituer le siège d'application d'une première force susceptible de solliciter ce tiroir vers la première chambre d'extrémité;
- un moyen élastique exerçant sur le tiroir une seconde force, dirigée en sens inverse de la première;
- des premier et second orifices traversant le corps et débouchant dans l'alésage respectivement au voisinage des première et seconde chambres, l'un de ces orifices étant relié à l'entrée haute pression;
- une carcasse montée dans le prolongement du corps pour obturer de façon étanche la seconde chambre d'extrémité, et dans laquelle sont logés une bobine électrique et un noyau magnétique, ce noyau étant susceptible de coulisser pour exercer sur le tiroir une troisième force de même sens que la première; et
- un clapet mettant sélectivement en communication la seconde chambre d'extrémité avec un troisième orifice pratiqué dans la carcasse, ce clapet comportant un organe d'obturation qui est susceptible d'être déplacé de sa position d'obturation par le noyau à l'encontre d'une force de rappel, et qui est propre à transmettre à son tour, après une course non nulle, ladite troisième force au tiroir, ce dernier étant susceptible d'opérer une première communication entre l'entrée haute pression et la sortie, et une seconde communication entre l'entrée basse pression et la sortie, et privilégiant la seconde communication par rapport à la première pour des valeurs croissantes de la troisième force.

Une électrovalve de ce type est par exemple décrite dans le brevet US-5 234 030 qui correspond au brevet français FR-2 679 299 et dont l'enseignement est incorporé à la présente description par référence.

L'application essentielle de cette électrovalve connue est la réalisation de systèmes de freinage pour véhicules à moteur, dotés d'une fonction d'antiblocage des roues.

Plus précisément, cette électrovalve a pour fonction de réguler la pression de freinage issue du maître-cylindre actionné par le conducteur du véhicule et/ou d'une pompe qui se substitue à lui en tant que source de haute pression, de manière à éviter un blocage intempestif des roues.

Dans la mesure cependant où la stabilité d'un véhicule freiné est dangereusement compromise lorsque le freinage n'est pas appliqué de façon prédominante sur les roues avant, et où il est par ailleurs indispensable d'envisager, pour tout circuit de freinage, l'éventualité de pannes susceptibles de l'affecter, l'électrovalve connue ne peut en pratique être utilisée sans le recours à un correcteur additionnel, qui est installé sur le circuit de freinage des roues arrière, et qui a pour fonction d'éviter que ce circuit ne reçoive la même pression que le circuit de freinage des roues avant, même en cas de défaillance électrique de l'électrovalve ou de son circuit d'alimentation.

L'électrovalve de l'invention, qui est par ailleurs conforme au préambule de la présente description, est essentiellement caractérisée en ce que sa sortie communique en permanence avec le troisième orifice et en ce que les premier et second orifices sont, à l'intérieur de l'alésage, isolés l'un de l'autre par le tiroir, ce dont il résulte que la sortie de l'électrovalve est isolée de l'entrée haute pression tant que le clapet n'est pas ouvert.

Ainsi, en cas de défaillance électrique, le circuit de freinage que commande l'électrovalve, et qui est relié à sa sortie, ne reçoit aucune pression, plutôt que de recevoir une pression trop forte, qui en l'absence de correcteur déséquilibrerait le véhicule et ne produirait qu'un glissement des roues, totalement inefficace pour le freinage.

Par exemple, la section de pression différentielle est constituée par la section d'une chambre de réaction creusée longitudinalement dans le tiroir, fermée de façon sensiblement étanche par au moins une aiguille, et communiquant en permanence avec l'entrée basse pression.

Selon un premier mode de réalisation possible de l'invention, la chambre de réaction peut être borgne et fermée par une seule aiguille solidaire du corps.

Selon un autre mode de réalisation possible de l'invention, le tiroir est percé sur toute sa longueur d'un conduit étagé, la chambre de réaction étant alors constituée par une portion de ce conduit et étant fermée par deux aiguilles respectives de diamètre différent et librement coulissantes l'une par rapport à l'autre et par rapport au corps.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe schématique d'une électrovalve de l'art antérieur en position de repos, telle que décrite dans le brevet US-5 234 030 correspondant au brevet français FR-2 679 299;
- la Figure 2 est une vue en coupe schématique d'une électrovalve conforme à un premier mode de réalisation de l'invention, représentée en position de repos;
- la Figure 3 est une vue en coupe schématique représentant une variante d'exécution de l'électrovalve de la figure 2, toujours en position de repos;
- les Figures 4 à 6 représentent sous forme simplifiée l'électrovalve de la figure 3 dans différentes positions;
- la Figure 7 est une vue en coupe schématique d'une électrovalve conforme à un second mode de réalisation de l'invention, représentée en position de repos;
- les Figures 8 à 10 représentent sous forme simplifiée l'électrovalve de la figure 7 dans différentes positions;
- la Figure 11 est une représentation schématique d'un circuit de freinage mettant en oeuvre le procédé de l'invention;
- la Figure 12 est un diagramme représentant une caractéristique fonctionnelle de l'électrovalve de la figure 1; et
- la Figure 13 est un diagramme représentant une caractéristique fonctionnelle d'une électrovalve conforme à la présente invention.

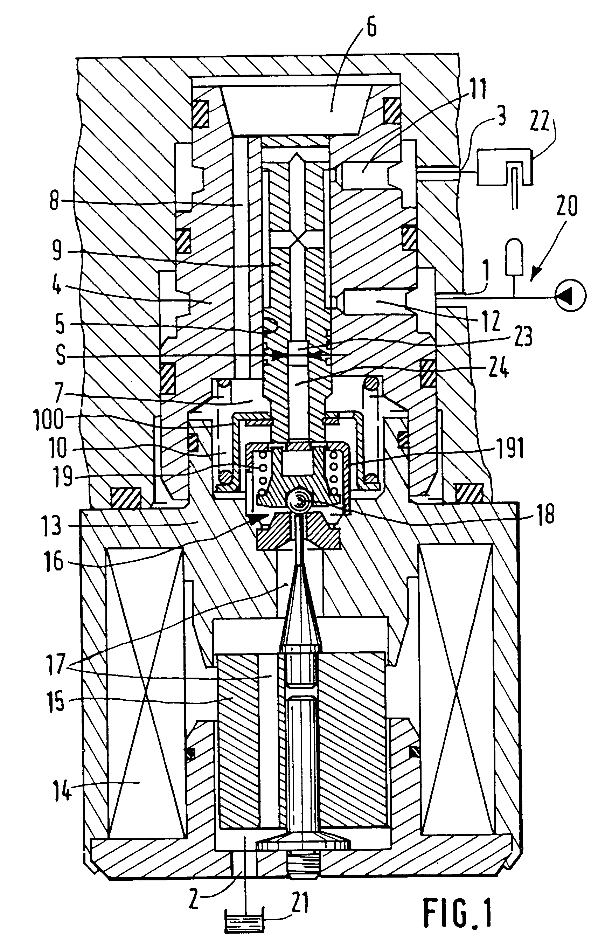

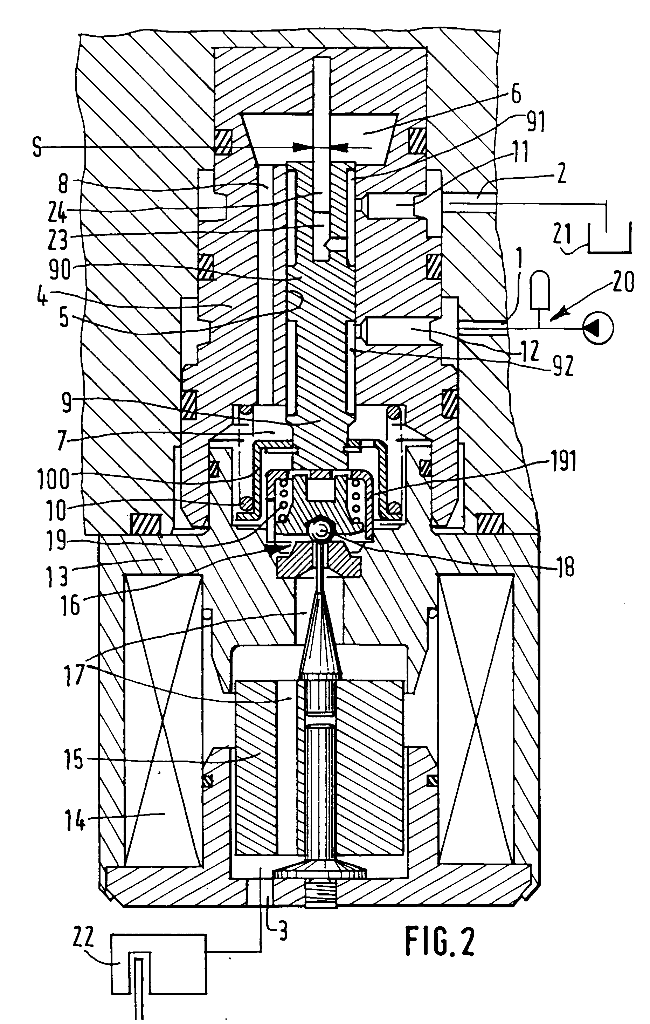

La similitude de présentation des figures 1 et 2 a été choisie pour permettre d'apprécier les caractéristiques communes à l'invention (figure 2) et à l'art antérieur (figure 1), ainsi que leurs différences.

Comme le montrent ces figures, l'invention concerne, de façon connue, une électrovalve proportionnelle de régulation de pression d'un fluide hydraulique, globalement dotée d'une entrée haute pression 1, d'une entrée basse pression 2, et d'une sortie 3 sur laquelle elle peut délivrer le fluide sous une pression contrôlée.

Cette électrovalve comprend plus précisément :
- un corps 4 percé d'un alésage 5 reliant des première et seconde chambres d'extrémité 6 et 7, celles-ci étant en outre reliées l'une à l'autre en permanence par un conduit longitudinal 8;
- un tiroir de régulation 9 coulissant dans l'alésage 5 et présentant une section S de pression différentielle propre à constituer le siège d'application d'une première force, due à la pression, et susceptible de solliciter ce tiroir vers la première chambre d'extrémité 6;
- un ressort 10 ou tout autre moyen élastique exerçant sur le tiroir une seconde force, de nature élastique et dirigée en sens inverse de la première force;
- des premier et second orifices 11 et 12 traversant le corps 4 et débouchant dans l'alésage 5 respectivement au voisinage des première et seconde chambres, l'un de ces orifices, par exemple 12, étant relié à l'entrée haute pression 1;
- une carcasse 13 montée dans le prolongement du corps 4 pour obturer de façon étanche la seconde chambre d'extrémité 7, et dans laquelle sont logés une bobine électrique 14 et un noyau magnétique 15, ce noyau étant susceptible de coulisser pour exercer sur le tiroir une troisième force, d'origine électromagnétique et de même sens que la première force exercée par la pression sur le tiroir; et
- un clapet 16 mettant sélectivement en communication la seconde chambre d'extrémité 7 avec un troisième orifice 17 pratiqué dans la carcasse, ce clapet comportant un organe d'obturation, par exemple une bille 18, qui est susceptible d'être déplacée de sa position d'obturation par le noyau à l'encontre d'une force de rappel exercée par un ressort 19, et qui est propre à transmettre à son tour au tiroir 9, après une course non nulle, la force développée par l'électro-aimant 14-15.

Ce tiroir peut ainsi, en fonction des déplacements qu'il effectue sous l'effet des forces qu'il reçoit, opérer une première communication entre l'entrée haute pression 1 et la sortie 3, et une seconde communication entre l'entrée basse pression 2 et cette sortie 3, la seconde communication étant par ailleurs privilégiée par rapport à la première pour des valeurs croissantes de la force d'origine électromagnétique.

En revanche, l'électrovalve de l'invention (figure 2) se distingue de l'électrovalve connue (figure 1) par le fait que sa sortie 3 communique en permanence avec le troisième orifice 17 et par le fait que les premier et second orifices 11 et 12 sont, à l'intérieur de l'alésage 5, isolés l'un de l'autre par le tiroir 9, ce dernier présentant entre ces orifices 11 et 12 une portion intermédiaire 90 dont la section transversale occupe intégralement l'alésage 5.

Dans l'application visée à titre essentiel pour l'électrovalve de l'invention, l'entrée haute pression 1 est reliée à une source de haute pression 20 qui est généralement constituée au moins par la pompe du système d'antiblocage de roues, l'entrée basse pression 2 est reliée au réservoir 21 de liquide de frein, et la sortie 3 est reliée au moteur de frein 22.

Dès lors, on comprend que, contrairement à ce qui se passe dans l'électrovalve de l'art antérieur, dans laquelle la sortie 3 est toujours en communication avec l'entrée haute pression 1, la sortie 3 de l'électrovalve de l'invention se trouve isolée de l'entrée haute pression 1 tant que le clapet 16 n'est pas ouvert.

Comme le montre la figure 2, la section S de pression différentielle est constituée par la section d'une chambre de réaction 23 creusée longitudinalement dans le tiroir, fermée de façon sensiblement étanche par au moins une aiguille 24, et communiquant en permanence avec l'entrée basse pression 2, cette chambre de réaction étant borgne dans le mode de réalisation de la figure 2, et fermée par une seule aiguille 24 qui est solidaire du corps 4.

Le fonctionnement de l'électrovalve de l'invention est le suivant.

En position de désactivation de l'électro-aimant 14-15, telle que représentée sur la figure 2, la source de fluide sous pression 20 est en communication avec la chambre 7 et isolée du moteur hydraulique 22 grâce au clapet 16, qui est normalement fermé sous l'action du ressort 19 appuyé sur la butée 191.

Comme les deux chambres d'extrémité 6 et 7 communiquent entre elles par le conduit 8, la même pression est appliquée aux deux extrémités du tiroir 9, cette pression exerçant sur le tiroir 9, par l'effet de la section de pression différentielle S, une force dirigée de bas en haut contre le ressort 10 par l'intermédiaire d'une coupelle 100, et qui maintient le tiroir 9 dans une position d'équilibre.

Dans cette situation, la chambre de réaction 23 est reliée au réservoir 21 par l'entrée basse pression 2, et la portion intermédiaire 90 du tiroir 9 permet d'isoler l'orifice haute pression 12 d'une première gorge annulaire 91 pratiquée dans ce tiroir.

Lorsque l'intention de freiner est détectée, par exemple en cas de relâchement de la pédale d'accélérateur ou de contact avec la pédale de frein, le calculateur (non représenté) du système de freinage envoie un léger courant électrique dans la bobine 14.

Ce courant, en circulant dans la bobine, engendre une force qui s'oppose à celle du ressort 19 et qui soulève la bille 18 de son siège, mettant ainsi les chambres d'extrémité 6 et 7 et la source de haute pression 20 en communication avec le moteur hydraulique 22.

Pendant la phase ultérieure de freinage, le calculateur applique la pression adéquate au moteur 22 en optimisant la valeur du courant de commande.

Plus précisément, la force engendrée par le courant électrique dans la bobine s'oppose à la force du ressort d'asservissement 10, le clapet 16 portant sur sa périphérie des doigts régulièrement répartis et pénétrant dans des ouvertures correspondantes de la coupelle, pour agir sur le tiroir 9.

Lorsque l'intensité du courant augmente, le clapet 16 vient en butée contre le tiroir 9, dont le mouvement à l'encontre du ressort 10 ferme une communication établie au bord d'une seconde gorge annulaire 92 du tiroir 9, isolant ainsi la source de haute pression 20 du conduit 8, donc du moteur hydraulique 22.

En même temps, le bord de la première gorge annulaire 91 met en communication la chambre 6 avec le premier orifice 11, donc le moteur hydraulique 22 avec le réservoir 21 de liquide de frein, ce dont résulte une chute de la pression du fluide dans le moteur 22.

L'homme de l'art aura compris que le mouvement du tiroir 9 à l'encontre du ressort 10 est engendré par le courant électrique dans la bobine 14 et se trouve par ailleurs favorisé par la réaction hydraulique dans la chambre de réaction 23, qui engendre une force s'ajoutant à celle produite par la bobine et opposée à celle engendrée par le ressort d'asservissement 10.

Lorsque l'intensité électrique diminue, la pression ayant chuté dans le moteur 22, la force de réaction hydraulique dans la chambre 23 diminue également, et le tiroir se déplace dans l'autre sens, refermant la communication entre le réservoir 21 de liquide de frein et la chambre 6 et donc le moteur 22, la communication entre la source haute pression 20 et le moteur 22 étant ensuite rétablie si nécessaire pour permettre une remontée de la pression dans le moteur 22.

Si l'intensité du courant injecté dans la bobine augmente, une communication entre le moteur 22 et le réservoir 21 s'ouvre à nouveau au bord de la gorge 91, et la pression dans le moteur 22 rechute.

Ainsi, toute augmentation du courant dans la bobine engendre une diminution de la pression du fluide dans le moteur 22 et inversement, de sorte qu'il est possible, en modulant le courant circulant dans la bobine 14, par exemple par découpage, de donner au tiroir 9 une position qui dépend de la pression régnant dans la chambre de réaction 23, et d'appliquer au moteur 22 la pression de fluide désirée en pilotant ce courant de façon adéquate.

Néanmoins, en situation de défaillance électrique se manifestant par exemple par l'absence de courant dans la bobine, l'électrovalve de l'invention revient en position de repos, assurant donc un isolement total entre la source sous pression 20 et le moteur 22.

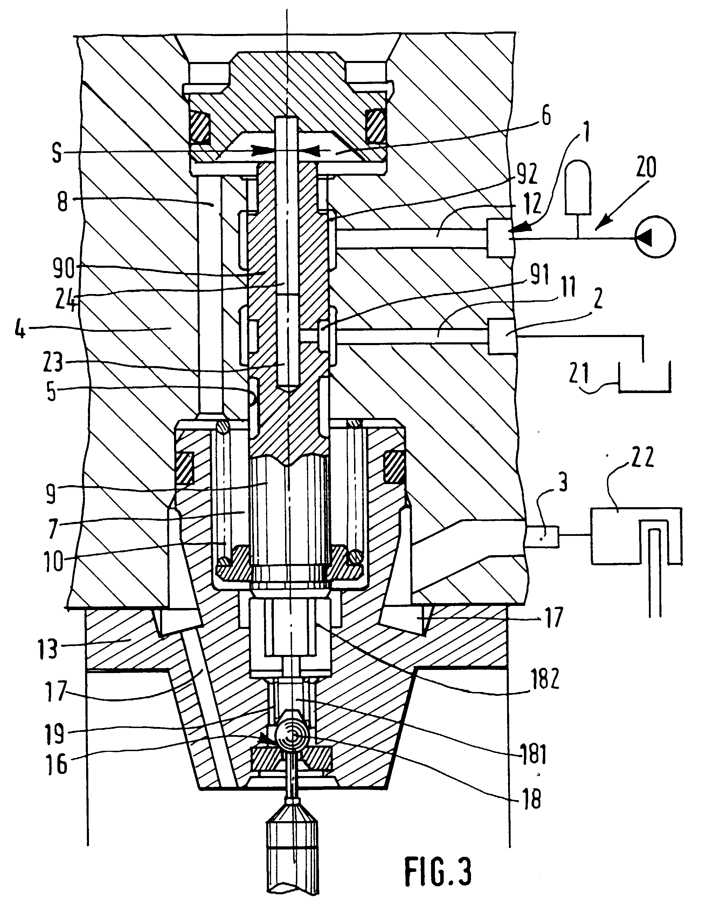

La description qui vient d'être faite du fonctionnement de l'électrovalve de la figure 2 est applicable, à quelques détails près, au fonctionnement de l'électrovalve de la figure 3.

Mis à part le fait que le clapet 16 est en l'occurrence constitué par un appui de bille cylindrique 181 contre une bague 182 dont le bord extérieur agit en appui sur le tiroir 9 en réaction contre le ressort 19, les seules différences avec la figure 2 résident dans le fait que les positions des orifices 1 et 2 d'une part, et des gorges annulaires 91 et 92 d'autre part sont inversées, l'équilibre et le sens des forces mises en jeu étant en revanche identiques.

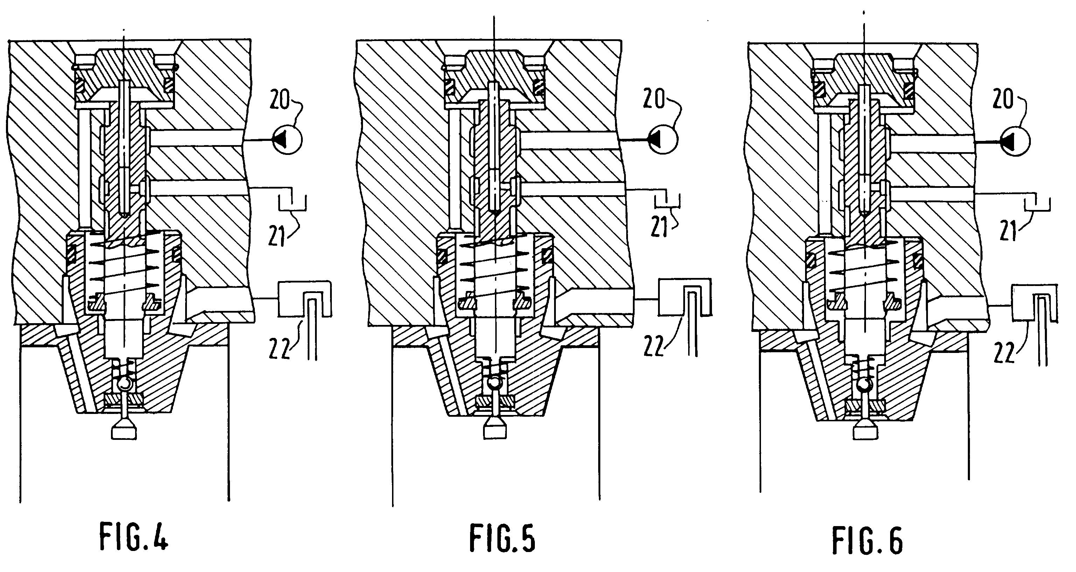

Les figures 4 à 6 présentent l'électrovalve de la figure 3 dans les trois phases de fonctionnement précédemment décrites.

Plus précisément, la figure 4 illustre la position de repos qu'adopte cette électrovalve à courant électrique de commande nul; la figure 5 illustre la phase de freinage correspondant à un courant électrique de commande croissant, pour lequel le tiroir 9 a pris une position d'équilibre telle que le moteur hydraulique 22 est isolé à la fois de la source de fluide sous pression 20 et du réservoir 21; et la figure 6 illustre la phase de freinage correspondant à un courant électrique de commande fort, pour lequel le tiroir 9 a pris une nouvelle position d'équilibre telle que le moteur hydraulique 22 est isolé de la source de fluide sous pression 20 et mis en communication avec le réservoir 21.

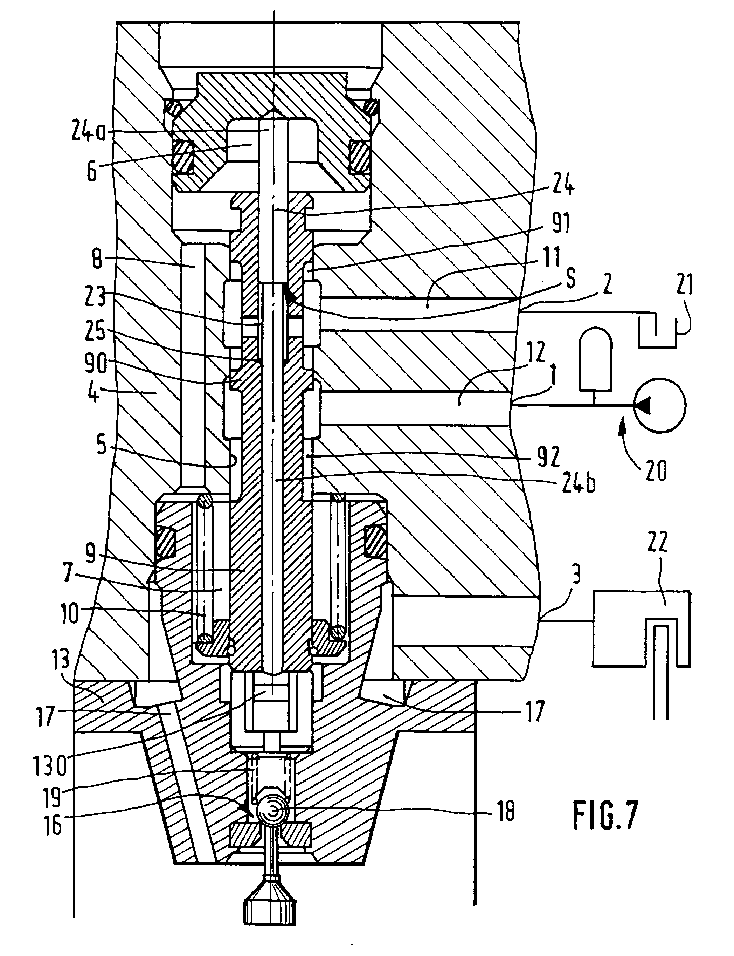

La description qui a été faite ci-dessus du fonctionnement de l'électrovalve de la figure 2 est encore applicable au fonctionnement de l'électrovalve de la figure 7, qui représente un autre mode de réalisation d'une électrovalve conforme à l'invention, illustrée en position de repos.

Dans cette électrovalve, le tiroir 9 est percé sur toute sa longeur d'un conduit étagé 25, la chambre de réaction 23 étant constituée par une portion de ce conduit qui est fermé par deux aiguilles respectives 24a et 24b, ces aiguilles présentant des diamètres différents et étant librement coulissantes l'une par rapport à l'autre et par rapport au corps 4.

Dans cette réalisation les orifices 1 et 2 sont disposés comme sur la figure 2 de même que les gorges annulaires 91 et 92, l'équilibre et le sens des forces mises en jeu étant identique, et la section de pression différentielle S correspondant à la différence des sections des deux aiguilles.

Par ailleurs, le clapet 16 est identique à celui décrit sur la figure 3, une butée 130, rigidement liée à la carcasse 13 étant toutefois prévue pour offrir un appui à l'aiguille 24b.

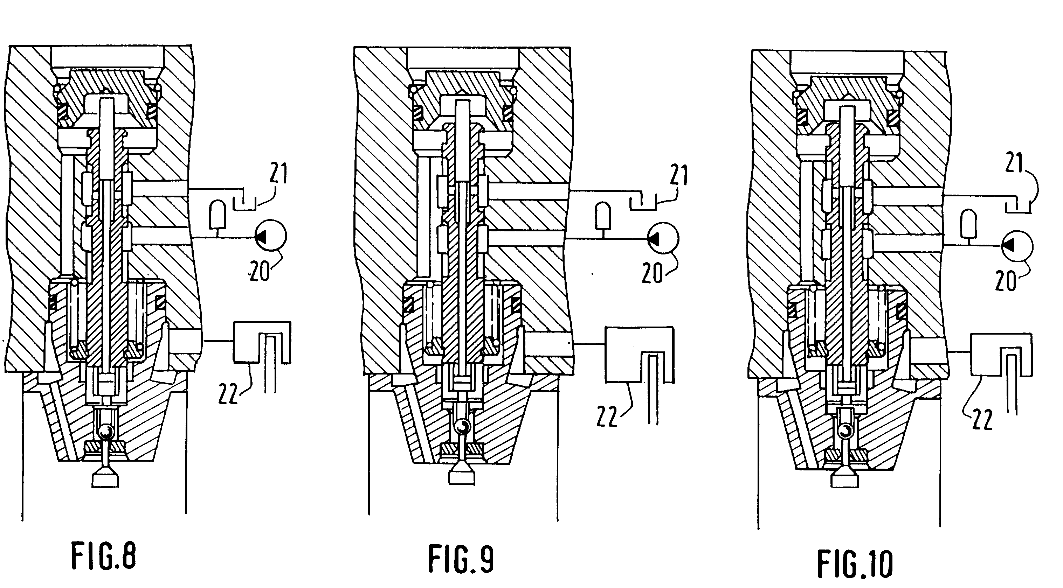

Les figures 8 à 10 présentent l'électrovalve de la figure 7 dans les trois phases de fonctionnement précédemment décrites.

Plus précisément, la figure 8 illustre la position de repos qu'adopte cette électrovalve à courant électrique de commande nul; la figure 9 illustre la phase de freinage correspondant à un courant électrique de commande croissant, pour lequel le tiroir 9 a pris une position d'équilibre telle que le moteur hydraulique 22 est isolé à la fois de la source de fluide sous pression 20 et du réservoir 21; et la figure 10 illustre la phase de freinage correspondant à un courant électrique de commande fort, pour lequel le tiroir 9 a pris une nouvelle position d'équilibre telle que le moteur hydraulique 22 est isolé de la source de fluide sous pression 20 et mis en communication avec le réservoir 21.

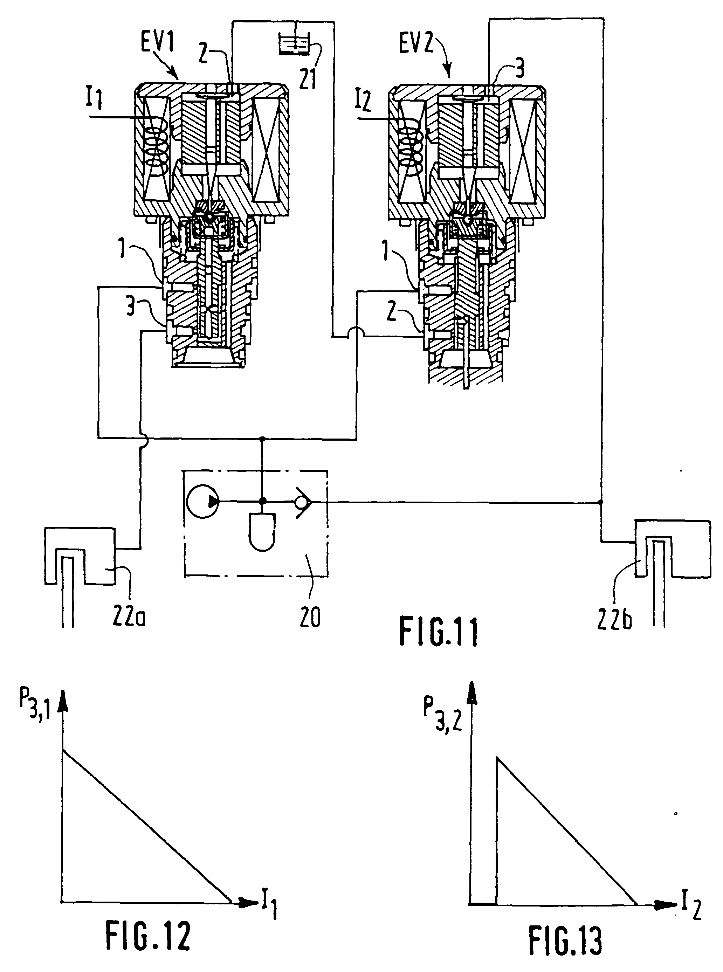

La figure 11 est une représentation schématique d'un circuit de freinage pour véhicule à moteur doté d'une fonction d'antiblocage des roues, et dont le fonctionnement illustre le procédé de l'invention.

Sur ce schéma, EV1 désigne par exemple l'électrovalve de la figure 1, cette électrovalve permettant, de façon connue, de relier un moteur de frein avant 22a d'une part à une source de basse pression 21, avec une perte de charge qui décroît pour des valeurs croissantes d'un premier courant de commande I1 injecté dans cette électrovalve et d'autre part à une source de haute pression 20, avec une perte de charge qui croît pour des valeurs croissantes de ce premier courant de commande I1.

EV2 désigne en revanche une électrovalve conforme à l'invention, cette électrovalve étant reliée à un moteur de frein arrière 22b et permettant, comme il vient d'être décrit, de relier ce moteur de frein arrière 22b d'une part à la source de basse pression 21, avec une perte de charge qui décroît pour des valeurs croissantes d'un second courant de commande I2 injecté dans l'électrovalve EV2, et d'autre part à la source de haute pression 20, avec une perte de charge qui croît pour des valeurs croissantes du second courant de commande I2, cette électrovalve EV2 empêchant néanmoins, comme il vient d'être décrit, la liaison entre le moteur de frein arrière 22b et la source de haute pression 20 pour une valeur nulle du second courant de commande I2.

La figure 12 illustre la principale caractéristique fonctionnelle de l'électrovalve EV1 de la figure 11, sous la forme d'un graphe portant en ordonnées la pression P3,1 délivrée sur la sortie 3 de cette électrovalve EV1, et en abscisses l'intensité I1 du premier courant de commande que reçoit cette dernière.

Enfin, la figure 13 illustre la principale caractéristique fonctionnelle de l'électrovalve EV2 de la figure 11, sous la forme d'un graphe portant en ordonnées la pression P3,2 délivrée sur la sortie 3 de cette électrovalve EV2, et en abscisses l'intensité I2 du second courant de commande que reçoit cette dernière.

## Revendications

1. Electrovalve proportionnelle de régulation de pression d'un fluide hydraulique, dotée d'une entrée haute pression (1), d'une entrée basse pression (2), et d'une sortie (3) sur laquelle elle peut délivrer le fluide sous pression contrôlée, cette électrovalve comprenant:
- un corps (4) percé d'un alésage (5) reliant des première et seconde chambres d'extrémité (6, 7), celles-ci étant en outre reliées l'une à l'autre en permanence par un conduit (8);
- un tiroir de régulation (9) coulissant dans l'alésage et présentant une section (S) de pression différentielle propre à constituer le siège d'application d'une première force susceptible de solliciter ce tiroir vers la première chambre d'extrémité (6);
- un moyen élastique (10) exerçant sur le tiroir une seconde force, dirigée en sens inverse de la première;
- des premier et second orifices (11, 12) traversant le corps et débouchant dans l'alésage (5) respectivement au voisinage des première et seconde chambres (6, 7), l'un de ces orifices étant relié à l'entrée haute pression (1);
- une carcasse (13) montée dans le prolongement du corps (4) pour obturer de façon étanche la seconde chambre d'extrémité (7), et dans laquelle sont logés une bobine électrique (14) et un noyau magnétique (15), ce noyau étant susceptible de coulisser pour exercer sur le tiroir une troisième force de même sens que la première; et
- un clapet (16) mettant sélectivement en communication la seconde chambre d'extrémité (7) avec un troisième orifice (17) pratiqué dans la carcasse (13), ce clapet comportant un organe d'obturation (18) qui est susceptible d'être déplacé de sa position d'obturation par le noyau (15) à l'encontre d'une force de rappel, et qui est propre à transmettre à son tour, après une course non nulle, ladite troisième force au tiroir (9), ce dernier étant susceptible d'opérer une première communication entre l'entrée haute pression (1) et la sortie (3), et une seconde communication entre l'entrée basse pression (2) et la sortie (3), et privilégiant la seconde communication par rapport à la première pour des valeurs croissantes de la troisième force,
caractérisée en ce que la sortie (3) communique en permanence avec le troisième orifice (17) et en ce que les premier et second orifices (11, 12) sont, à l'intérieur de l'alésage (5), isolés l'un de l'autre par le tiroir (9), ce dont il résulte que la sortie (3) est isolée de l'entrée haute pression (1) tant que le clapet (16) n'est pas ouvert.

2. Electrovalve suivant la revendication 1, caractérisée en ce que la section (S) de pression différentielle est constituée par la section d'une chambre de réaction (23) creusée longitudinalement dans le tiroir (9), fermée de façon sensiblement étanche par au moins une aiguille (24, 24a), et communiquant en permanence avec l'entrée basse pression.

3. Electrovalve suivant la revendication 2, caractérisée en ce que la chambre de réaction (23) est borgne et fermée par une seule aiguille (24) solidaire du corps.

4. Electrovalve suivant la revendication 2, caractérisée en ce que le tiroir (9) est percé sur toute sa longueur d'un conduit étagé (25), la chambre de réaction (23) étant constituée par une portion de ce conduit qui est fermée par deux aiguilles respectives (24a, 24b) de diamètre différent et librement coulissantes l'une par rapport à l'autre et par rapport au corps (4).

## Patentansprüche

1. Proportional-Elektroventil zur Regulierung des Drucks eines Hydraulikfluids, mit einem Hochdruckeingang (1), einem Niederdruckeingang (2) sowie einem Ausgang (3), an welchem es das Fluid mit gesteuertem Druck liefern kann, wobei das Elektroventil enthält:
- einen Körper (4), der von einer Bohrung (5) durchbrochen ist, die eine erste und eine zweite Endkammer (6, 7) miteinander verbindet, wobei diese Kammern außerdem permanent mittels einer Leitung (8) miteinander verbunden sind;
- einen Regulierungsschieber (9), der in der Bohrung gleitet und einen Differenzdruckquerschnitt (S) aufweist, der geeignet ist, den Sitz zum Aufbringen einer ersten Kraft zu bilden, die den Schieber zur ersten Endkammer (6) hin beaufschlagen kann;
- ein elastisches Mittel (10), das auf den Schieber eine zweite Kraft ausübt, die in zur ersten Richtung entgegengesetzter Richtung wirkt;
- eine erste und eine zweite Öffnung (11, 12), die den Körper durchqueren und in die Bohrung (5) in der Nähe der ersten bzw. der zweiten Kammer (6, 7) münden, wobei eine der Öffnungen mit dem Hochdruckeingang (1) verbunden ist;
- ein Gehäuse (13), das in der Verlängerung des Körpers (4) angebracht ist, um in dichter Weise die zweite Endkammer (7) zu verschließen, und in welchem eine elektrische Wicklung (14) und ein Magnetkern (15) angeordnet sind, wobei der Kern verschiebbar ist, um auf den Schieber eine dritte Kraft in derselben Richtung wie die erste Kraft auszuüben; und
- ein Ventil (16), das selektiv die zweite Endkammer (7) mit einer dritten Öffnung (17) verbindet, die in dem Gehäuse (13) ausgebildet ist, wobei das Ventil ein Verschlußorgan (18) enthält, das aus seiner Verschlußstellung mittels des Kerns (15) entgegen einer Rückstellfeder verstellt werden kann und das seinerseits nach einem von Null verschiedenen Weg die dritte Kraft zum Schieber (9) übertragen kann, wobei dieser eine erste Verbindung zwischen dem Hochdruckeingang (1) und dem Ausgang (3) sowie eine zweite Verbindung zwischen dem Niederdruckeingang (2) und dem Ausgang (3) betätigen kann und die zweite Verbindung bezüglich der ersten bei ansteigenden Werten der dritten Kraft privilegiert,
dadurch gekennzeichnet, der Ausgang (3) permanent mit der dritten Öffnung (17) in Verbindung steht und daß die erste und die zweite Öffnung (11, 12) im Inneren der Bohrung (5) mittels des Schiebers (9) voneinander isoliert sind, woraus resultiert, daß der Ausgang (3) vom Hochdruckeingang (1) isoliert ist, wenn das Ventil (16) nicht geöffnet ist.

2. Elektroventil nach Anspruch 1, dadurch gekennzeichnet, daß der Differenzdruckquerschnitt (S) durch den Querschnitt einer Reaktionskammer (23) gebildet ist, die in Längsrichtung im Schieber (9) gebohrt ist, in im wesentlichen dichter Weise mittels wenigstens einer Nadel (24, 24a) verschlossen ist und permanent mit dem Niederdruckeingang in Verbindung steht.

3. Elektroventil nach Anspruch 2, dadurch gekennzeichnet, daß die Reaktionskammer (23) eine Blindkammer ist und von einer einzigen, fest mit dem Körper verbundenen Nadel (24) verschlossen ist.

4. Elektroventil nach Anspruch 2, dadurch gekennzeichnet, daß der Schieber (9) über seine gesamte Länge von einer gestuften Leitung (25) durchbrochen ist, wobei die Reaktionskammer (23) durch einen Abschnitt dieser Leitung gebildet ist, der von zwei entsprechenden Nadeln (24a, 24b) verschlossen ist, die unterschiedliche Durchmesser haben und relativ zueinander und bezüglich des Körpers (4) frei verschiebbar sind.

## Claims

1. Proportional solenoid valve for regulating the pressure of a hydraulic fluid, this valve being provided with a high-pressure inlet (1), with a low-pressure inlet (2), and with an outlet (3) on which it can deliver the fluid under a controlled pressure, this solenoid valve comprising:
- a body (4) pierced with a bore (5) connecting first and second end chambers (6, 7) together, these further being connected to one another permanently by a duct (8);
- a regulating slide valve (9) sliding within the bore and having a cross-section (S) for differential pressure capable of constituting the seat of application of a first force capable of urging this slide valve towards the first end chamber (6);
- an elastic means (10) exerting a second force, pointing in the opposite direction from the first, on the slide valve;
- first and second orifices (11, 12) passing through the body and emerging in the bore (5) respectively close to the first and second chambers (6, 7), one of these orifices being connected to the high-pressure inlet (1);
- a casing (13) mounted in the extension of the body (4) in order to close off the second end chamber (7) in hermetic fashion, and in which there are housed an electric coil (14) and a magnetic core plunger (15), this core plunger being capable of sliding in order to exert a third force in the same direction as the first on the slide valve; and
- a valve (16) placing the second end chamber (7) selectively in communication with a third orifice (17) made in the casing (13), this valve including a shut-off member (18) which can be shifted from its shut-off position by the core plunger (15) against a return force, and which is able, after a non-zero travel, in turn to transmit the said third force to the slide valve (9), the latter being capable of bringing about a first communication between the high-pressure inlet (1) and the outlet (3), and a second communication between the low-pressure inlet (2) and the outlet (3), and favouring the second communication over the first for increasing values of the third force,
characterized in that the outlet (3) permanently communicates with the third orifice (17) and in that the first and second orifices (11, 12) are, inside the bore (5), isolated from one another by the slide valve (9), which results in the fact that the outlet (3) is isolated from the high-pressure inlet (1) as long as the valve (16) is not open.

2. Solenoid valve according to Claim 1, characterized in that the cross-section (S) for differential pressure consists of the cross-section of a reaction chamber (23) hollowed longitudinally out of the slide valve (9), closed in a substantially hermetic fashion by at least one needle (24, 24a) and permanently communicating with the low-pressure inlet.

3. Solenoid valve according to Claim 2, characterized in that the reaction chamber (23) is blind and closed by a single needle (24) secured to the body.

4. Solenoid valve according to Claim 2, characterized in that the slide valve (9) is pierced along its entire length with a stepped duct (25), the reaction chamber (23) consisting of a portion of this duct which is closed by two respective needles (24a, 24b) of different diameter and which can slide freely relative to each other and relative to the body (4).
